## Europäisches Patentamt

## European Patent Office

## Office européen des brevets

(11) Publication number: **0 118 772**
**B1**

(12) **EUROPEAN PATENT SPECIFICATION**

(45) Date of publication of patent specification: **11.05.88**

(51) Int. Cl.⁴: **F 02 F 5/00, F 16 J 9/14**

(21) Application number: **84101338.6**

(22) Date of filing: **09.02.84**

(54) **Piston for reciprocating internal combustion engine.**

(30) Priority: **12.02.83 JP 19221/83 u**

(43) Date of publication of application:
**19.09.84 Bulletin 84/38**

(45) Publication of the grant of the patent:
**11.05.88 Bulletin 88/19**

(84) Designated Contracting States:
**DE FR GB IT**

(56) References cited:
**EP-A-0 007 659**
**WO-A-80/02314**
**WO-A-80/02314**
**FR-A- 762 862**
**FR-A-1 018 648**
**US-A-1 930 857**

**VDMA-Normblatt 24910, April 1960**
**Deutsche Industrie Norm DIN 34109, Seite 8,**
**Sept. 1980**
**Engineer's Handbook of piston rings, seal**
**rings, mechanical shaft seals, 9th ed. 1975,**
**KOPPERS COMP. INC.**
**Diesel and Gas Engine Progress, p. 52**
**Power's Manual on Piston Rings, p. 107**

(73) Proprietor: **KABUSHIKI KAISHA RIKEN**
**13-5, Kudan-Kita 1-chome**
**Chiyoda-ku Tokyo (JP)**

(73) Proprietor: **HONDA GIKEN KOGYO KABUSHIKI**
**KAISHA**
**27-8, Jingumae, 6-chome**
**Shibuya-ku, Tokyo 150 (JP)**

(72) Inventor: **Umegawa, Koujiro**
**1-7-21, Matsumi**
**Kashiwazaki-shi Niigata-ken (JP)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

## Description

Piston for an internal combustion engine

This invention relates to a piston for an internal combustion engine according to the pre-characterizing portion of claim 1.

The standard piston ring in practical use is a combination of three rings, namely a top ring serving as the pressure ring which is for the purpose of preventing a phenomenon sometimes referred to as "blow-by" wherein high pressure combustion gas from the combustion chamber side of the engine flows out to the crank case side thereof, a second ring and an oil ring which reduces the consumption of oil by suppressing the amount of lubricating oil which flows into the combustion chamber side of the engine from the crank case side.

The combined ring of this standard construction was submitted to tests using a 1500 cc four-cycle engine for the purpose of measuring oil consumption (gr/h) and blow-by (l/min). In the test, referred to hereinafter as Test I, the mean values obtained were 0 gr/h, 17 l/min at 4600 rmp with a full engine load, 10 gr/h, 18 l/min at 5200 rpm with a full engine load, and 50 gr/h, 0 l/min at 2500 rpm with an engine high boost of 650 m/mHg. While oil consumption and blow-by values on this order are tolerable for practical use, it is preferable that these values be reduced to improve upon engine efficiency.

To the foregoing end, various pressure rings used in a combination of three rings have been proposed to exhibit an improved oil tightness characteristic.

However, while improvements in pressure rings have made it possible to diminish blow-by in reciprocating internal combustion engines, the piston arrangements heretofore available have not succeeded in simultaneously reducing oil consumption.

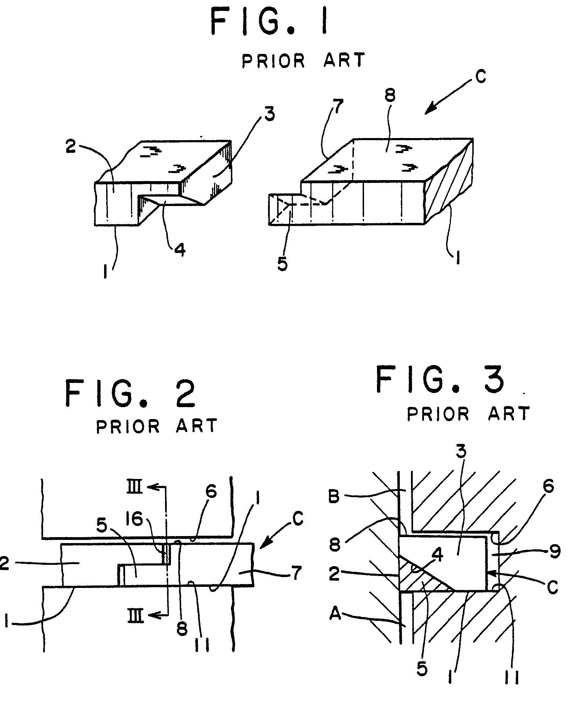

Such a prior-art piston for use in an internal combustion engine is shown in Figs. 1, 2 and 3 of the drawings; it has a pressure ring C designed for improved gas tightness. The pressure ring C, the butt ends of which have a so-called double-angle construction, has a lower surface 1 facing the low-pressure side A of a piston ring groove, an outer circumferential surface 2 which slidably contacts the inner circumferential wall of a cylinder bore, and a radially extending first butt flat end face 3. A corner portion formed on the lower side of the pressure ring C by the intersection of the lower surface 1, the outer circumferential surface 2 and the first butt flat end face 3 is partially cut away to form a notch 4 which is contiguous to the lower surface 1, the outer circumferential surface 2 and the first butt flat end face 3. The pressure ring C further includes a radially extending second butt flat end face 7 opposing the first butt flat end face 3, and a rib 5 projecting circumferentially from the second butt flat end face 7 at a position corresponding to the notch 4, the rib 5 having a shape which is complementary to that of the notch 4 for being received by the notch 4 when the pressure ring C is installed in an annular piston ring groove formed in the piston.

Figs. 2 and 3 show the pressure ring C installed in the annular groove of the piston. It will be understood that high-pressure gas from the high-pressure side B between the piston and the cylinder wall flows into a cavity 9 at the back of the pressure ring C through a clearance 16 between the first and the second butt end faces 3, 7, and through a clearance between an upper surface 8 of the pressure ring C and an upper side wall 6 of the piston ring groove. However, the lower surface 1 of the pressure ring C facing the low-pressure side A, is in intimate contact with a lower side wall 11 of the piston ring groove, and the circumferentially extending rib 5 projecting from the second butt flat end face 7 is gas-tightly received in the notch 4 formed at the lower corner portion. As a result, the high-pressure gas which has flown into the cavity 9 at the back of the pressure ring C is impeded from flowing out to the low-pressure side A through the butt flat end faces 3,7 of the ring, thereby providing excellent gas tightness.

Owing to the foregoing advantage, it has been contemplated to install the pressure ring C having the above-described double-angle butt end structure in the piston ring groove in order to diminish blow-by.

Accordingly, a test referred to hereinafter as Test II, was performed using the engine employed in Test I. In Test II, the piston used had a top or pressure ring and an oil ring without using a second pressure ring, the top or pressure ring being the double-angle pressure ring C illustrated in Figs. 1 and 2. The pressure ring C was installed in the annular groove of the piston, as illustrated in Fig. 3. The oil ring was the conventional one. The experimental results in terms of oil consumption (gr/h) and blow-by (l/min) are as follows. Specifically, the values obtained were 50 gr/h, 5 l/min at 4600 rpm with a full engine load, 170 gr/h, 5 l/min at 5200 rpm with a full engine load, and 80 gr/h, 0 l/min at 2500 rpm with an engine high boost of 650 m/mHg. It will be appreciated that a reduction in blow-by is undoubtedly achieved when the pressure ring C having the double-angle butt end structure is installed. On the other hand, the values of oil consumption show that tested piston construction increases the oil consumption to a marked extent.

It is the object of the present invention to so develop the above-described piston constructon for an internal combustion engine that a noticeable decrease of oil consumption is achieved without a substantial increase of blow-by.

According to the invention, this object is achieved by means of the features in the characterizing portion of the claim. The reversed installation of a pressure ring of a design known per se (see US—A—1 930 857 into the ring groove below the piston head causes a noticeable reduction of oil consumption, while the blow-by inreases only negligibly.

The EP—A—0 007 659 shows an arrangement of a pressure ring and an oil ring at the main body of a piston of an internal combustion engine. The pressure ring has a inner chamfer, which is formed adjacent the inner circumferential surface of the pressure ring and oriented to the high-pressure side of the pressure ring. The oil ring is disposed on the low-pressure side of the pressure ring.

The US—A—1 930 857 shows a seal or pressure ring, a radial surface of which is provided with a rib or projection.

The above-described prior art piston construction comprising the pressure ring C as well as the piston according to the invention are shown in the drawings, in which:

Fig. 1 is a perspective view showing the butt end portions of a double-angle ring employed in the prior-art piston for application to a reciprocating internal combustion engine;

Fig. 2 is a partial front view showing the butt end portions of Fig. 1 when they are fitted together upon installation in an annular piston groove;

Fig. 3 is a partial side section of the prior-art piston with the double-angle ring of Fig. 1 installed in the annular groove thereof;

Fig. 4 is a side view, shown partially in section, of a piston embodying the present invention;

Fig. 5 is a partial perspective view showing a pressure ring used in the piston shown in Fig. 4; and

Fig. 6 is a partial side section of the piston shown in Fig. 4.

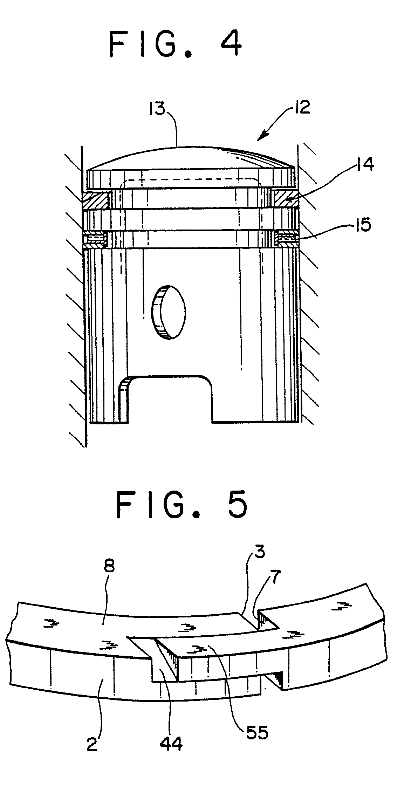

Reference will now be made to Figs. 4 through 6.

A piston, having a main body 12 including a piston head 13, also includes a pressure ring 14 installed in an outer circumferential groove adjacent the piston head 13, and an oil ring 15 installed in an outer circumferential groove located below the groove accommodating the pressure ring 14. The pressure ring 14 has a double-angle butt end construction comprising an outer circumferential surface 2 slidably contacting the inner circumferential wall of a cylinder bore, a radially extending first butt flat end face 3, and an upper surface 8 facing the combustion chamber side, namely the high-pressure side B, of the engine piston chamber. A corner portion formed on the upper side of the pressure ring 12 by the intersection of the outer circumferential surface 2, the first butt flat end face 3 and the upper surface 8 is partially cut away to form a notch 44 which is contiguous to the outer circumferential surface 2, the first butt flat end face 3 and the upper surface 8. The pressure ring 14 further includes a radially extending second butt flat end face 7 opposing the first butt flat end face 3, and rib 55 projecting circumferentially from the second but flat end face 7 at a position corresponding to the notch 44, the rib 55 having a shape which is complementary to that of the notch 44 for being gas-tightly received by the notch 44 when the pressure ring 14 is installed in the piston groove. The oil ring 15 can be of the well-known combined oil ring construction made of steel.

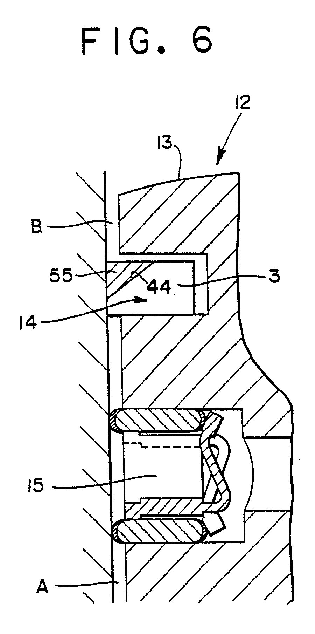

The piston having the above-described double-angle pressure ring 14 installed therein as shown in Fig. 6 was submitted to a test, referred to hereinafter as Test III, under the same conditions which prevailed in Test II. The experimental results in terms of oil consumption (gr/h) and blow-by (l/min) are as follows. Specifically, the values obtained were 0 gr/h, 10 l/min at 4600 rpm with a full engine load, 28 gr/h, 10 l/min at 5200 rpm with a full engine load, and 20 gr/h, 0 l/min at 2500 rpm with an engine high boost of 650 m/mHg.

In comparison with the piston used in Test II the piston having the above-described pressure ring 14 reduces the oil consumption by a wide margin under each of the engine running conditions, whereas it increase the blow-by values only in a very slight extent.

In comparison with the piston used in Test I the piston having the above-described pressure ring 14 reduces the blow-by values in a great extent and it even decreases the oil consumption, if regard is taken of the working range, in which an internal combustion engine is mainly operated.

Thus, the piston having the pressure ring 14 makes it possible to improve engine efficiency.

## Claim

A piston for an internal combustion engine comprising a main body (12) having piston head (13), one pressure ring (14) installed in a ring groove formed on an outer surface of said piston main body (12) adjacent to the piston head (13) and one oil ring (15) installed in a ring groove formed on the outer surface of said piston main body (12) below said pressure ring (14), characterized in that said pressure ring (14) has a double-angle butt end construction comprising an outer circumferential surface (2) slidably contacting an inner surface of a cylinder bore, an upper surface (8) facing a combustion chamber side (B) of the engine, a radially extending first butt flat end face (3), said outer circumferential surface (2), said upper surface (8) and said first butt flat end face (3) defining a corner portion on a side of said pressure ring (14) only said corner portion being partially cut away to form a notch (44), which is contiguous to said outer circumferential surface (2), said upper surface (8) and said first butt flat end face (3), and of which the surface extends or is inclined downwardly from said upper surface (8) to said outer circumferential surface (2), that said pressure ring (14) further has a radially extending second butt flat end face (7) opposing said first butt flat end face (3) and a rib or projection (55) projecting circumferentially from said second butt flat end face (7) only at a position corresponding to said notch (44), said rib or projection (55) having a shape which is complementary to that of said notch (44) for being engaged by said notch (44).

## Patentansprüch

Kolben für eine Brennkraftmaschine mit einem Hauptkörper (12), der einen Kolbenkopf (13) aufweist, einem Druckring (14), der in einer Ringnut, die auf einer Außenfläche des Kolbenhauptkörpers (12) neben dem Kolbenkopf (13) geformt ist, eingebaut ist, und einem Ölring (15), der in einer Ringnut, die auf der Außenfläche des Kolbenhauptkörpers (12) unter dem Druckring (14) geformt ist, eingebaut ist, dadurch gekennzeichnet, daß der Druckring (14) einen Doppelschrägstoßendaufbau aufweist, mit einer Außenumfangsfläche (2), die in gleitender Anlage an der Innenfläche einer Zylinderbohrung ist, einer Oberfläche (8), die einer Brennkammerseite (B) der Maschine gegenüberliegt, einer sich radial erstreckenden ersten ebenen Stoßendfläche (3), wobei die Außenumfangsfläche (2), die Oberfläche (8) und die erste ebene Stoßendfläche (3) einen Kantenabschnitt an einer Seite des Druckrings (14) ausbilden, wobei lediglich dieser Kantenabschnitt teilweise weggeschnitten ist, so daß er eine Aussparung (44) ausbildet, die an die Außenumfangsfläche (2), die Oberfläche (8) und die erste ebene Stoßendfläche (3) angrenzt und deren Oberfläche sich von der Oberfläche (8) zur Außenumfangsfläche (2) erstreckt bzw. zwischen diesen nach unten geneigt ist, daß der Druckring (14) desweiteren eine sich radial erstreckende zweite ebene Stoßendfläche (7), die der ersten ebenen Stoßendfläche (3) gegenüberliegt, und eine Rippe bzw. einen Vorsprung (55) aufweist, der in Umfangsrichtung von der zweiten ebenen Stoßendfläche (7) ausschließlich an einer der Ausnehmung (44) entsprechenden Stelle vorsteht, wobei die Rippe bzw. der Vorsprung (55) eine Form hat, die zwecks Aufnahme der Rippe bzw. des Vorsprungs (55) durch die Aussparung (44) komplementär zu der Form der Aussparung (44) ist.

## Revendication

Piston pour moteur à combustion interne comprenant un corps principal (12), comportant une tête de piston (13), un segment de pression (14) installé dans une gorge annulaire formée sur la surface externe du corps principal (12) dudit piston à proximité de la tête de piston (13) et un segment à huile (15) installé dans une gorge annulaire formée sur la surface externe dudit corps principal (12) du piston au-dessus dudit segment de pression (14), caractérisé en ce que ledit segment de pression (14) a une construction à extrémité de butée à angle double comprenant une surface circonférentielle externe (2) en contact coulissant avec une surface interne d'un alésage cylindrique, une surface supérieure (8) face au côté (B) la chambre de combustion du moteur, un première face d'extrémité plate de butée (3) s'étendant radialement, ladite surface circonférentielle externe (2), ladite surface supérieure (8) et ladite première face d'extrémité plate de butée (3) définissant une partie de coin sur un côté dudit segment de pression (14) dont seule ladite partie de coin est partiellement découpée pour former une encoche (44) qui est contiguë de ladite circonférentielle externe (2), de ladite surface supérieure (8) et de ladite première face d'extrémité plate de butée (3), et dont la surface s'étend ou est inclinée vers le bas à partir de ladite surface supérieure (8) vers ladite surface circonférentielle externe (2), en ce que ledit segment de pression (14) comprend en outre une seconde face d'extrémité plate de butée (7) s'étendant radialement t face à ladite première face d'extrémité plate de butée (3) et une nervure ou saillie (55) faisant saillie circonférentiellement à partir de ladite seconde face d'extrémité plate de butée (7) seulement dans une position qui correspond à ladite encoche (44), ladite nervure ou saillie (55) ayant une forme qui est complémentaire de celle de ladite encoche (44) en vue de venir en engagement dans ladite encoche (44).

# FIG. 1
PRIOR ART

# FIG. 2
PRIOR ART

# FIG. 3
PRIOR ART

# FIG. 4

# FIG. 5

# FIG. 6